# EUROPEAN PATENT SPECIFICATION

(11) **EP 1 175 785 B1**
(45) Date of publication and mention of the grant of the patent: **11.02.2004**
(21) Application number: 00925488.9
(22) Date of filing: 26.04.2000
(51) Int. Cl.: H04N 7/24, H04N 7/26

(54) **NETWORKED DELIVERY OF PROFILED MEDIA FILES TO CLIENTS**
ÜBERTRAGUNG VON PROFILIERTEN MEDIADATEIEN AN KUNDEN ÜBER EIN NETZWERK
ACHEMINEMENT EN RESEAU DE FICHIERS SUPPORTS PROFILES VERS DES CLIENTS

(30) Priority: 26.04.1999 GB 9909606
(43) Date of publication of application: 30.01.2002
(73) Proprietor: IPV Limited, Cambridge CB3 0RN (GB)
(72) Inventor: KING, Tony, Richard, Cambridge CB3 9JW (GB); GLAUERT, Timothy, Holroyd, Cambridge CB2 5EW (GB); COLE, David, John, Cambridge CB4 8EA (GB)
(74) Representative: Langley, Peter James
(86) International application number: PCT/GB2000/001610
(87) International publication number: WO 2000/065837

(56) References cited:
- EP-A- 0 402 954
- EP-A- 0 739 140
- EP-A- 0 884 850
- WO-A-96/29818
- WO-A-98/37699
- WO-A-98/41021
- BEONG-JO KIM ET AL: "An embedded wavelet video coder using three-dimensional set partitioning in hierarchical trees (SPIHT)" PROCEEDINGS DCC '97. DATA COMPRESSION CONFERENCE (CAT. NO.97TB100108), PROCEEDINGS DCC '97. DATA COMPRESSION CONFERENCE, SNOWBIRD, UT, USA, 25-27 MARCH 1997, pages 251-260, XP002143648 1997, Los Alamitos, CA, USA, IEEE Comput. Soc. Press, USA ISBN: 0-8186-7761-9
- CHADDHA N ET AL: "SCALABLE COMPRESSION BASED ON TREE STRUCTURED VECTOR QUANTIZATION OF PERCEPTUALLY WEIGHTED BLOCK, LAPPED, AND WAVELET TRANSFORMS" PROCEEDINGS OF THE INTERNATIONAL CONFERENCE ON IMAGE PROCESSING. (ICIP),US,LOS ALAMITOS, IEEE COMP. SOC. PRESS, 23 October 1995 (1995-10-23), pages 89-92, XP000623109 ISBN: 0-7803-3122-2

## Description

### Technical Field

This invention relates to methods for the delivery of a media file, such as a video and audio file, from a server to a device using a network, in which the file stored on the server is encoded so that the generation and/or reception of its associated bitstream can be encoded to yield a media file at a client which meets specific criteria.

### Background to the Invention

Recent years have seen considerable interest in improving techniques for delivering all kinds of media files, such as video and audio files, to PC clients over low bandwidth networks, prompted not least by the ever-increasing use of still and animated images in Web pages. In most cases, the quality of the resulting images at the client and the amount of data transferred from the server to a client is however not only determined by the server that is delivering the data but is also the same for all clients. Recent developments have seen the introduction of Progressive Download, where a low quality version of the media is initially available and then further data is downloaded to improve the quality of the media. In no prior art case is it possible to control the way in which the quality improves during a progressive download on a per-client basis.

Existing solutions have little flexibility to take account of the fact that different clients will likely have different connection bandwidths and may wish to see an image at different quality levels. For example, a high-quality colour image may be delivered by the server only to be displayed at low resolution in monochrome by a client, such as a handheld device. Alternatively, the result can be poor quality images despite the availability of a high-bandwidth ADSL connections. The problems are increased when animated sequences are used because of the increased amount of data that must be delivered. Generally, media file delivery over reduced bandwidth connections such as the Internet is currently characterised by the delivery of unwanted data and significant delays in the display of information.

One approach to addressing these problems is found in the Custom Download Configuration option in the Indeo product from Intel Corporation. In this system, one encoded video file can be played back at many different data rates and quality levels, each of which is suitable for different network bandwidths or playback-platform capabilities. But the file author has to set the relevant frame rate and the required quality level at a server prior to a download, so that the download meets these quite limited author determined requirements. Once set, the download configuration will apply to all downloads to all clients.

EP-A-0 402 954 discloses a method in which an operator at the transmitter site can select a region in an image and cause it to be sent at a predetermined resolution to a receiver device in priority to other parts of the image, which may be at different resolutions. The viewer at the receiver site may decide that sufficient data were received.

Reference may also be made to US patent no. US5585852 to Intel Corporation, which discloses a system in which a source video is transformed into 6 mini-videos. One or more of these 'band sequences' can be omitted in the inverse transform, thereby losing the information carried in the omitted band sequence. This yields a form of quality scalability, although it is inflexible.

Similar ideas are disclosed in Patent application EP A 0739140 to Sun Microsystems whereby different components of hierarchically encoded video are delivered in response to client requests, though no mechanism for achieving this is described. All the above systems lack the flexibility of the current invention and they are all tied to a specific media compression scheme.

Reference may also be made to systems devised by RealNetworks, Microsoft and others that support the encoding of multiple versions of media at different bandwidths and the automatic selection of the appropriate version for the available bandwidth. In such systems the target bandwidths and quality levels are pre-determined when the media is encoded rather than being selected by the client and server when the media is delivered. In some cases there may be limited quality control during delivery but this is on an ad-hoc basis and, in contrast to the current invention, uses mechanisms specific to a particular media compression scheme.

Another problem when image browsing over a network is that an image is often viewable only after a significant portion of the download is complete; this can be both time consuming, slowing down the browsing of sites and, when the image proves unsuitable or uninteresting, frustrating. It is therefore very convenient if an image can become progressively clearer as the image download continues: a user therefore initially, and rapidly, sees a very low resolution image, which gradually becomes clearer as more data is downloaded, allowing the user to end the download at any time. One conventional approach to meeting this need for 'progressive image transmission' is the interleaved GIF image.

Another approach is disclosed in US Patent No. 5880856 to Microsoft Corporation, which teaches a particular approach to the use of wavelet transforms. In both cases, and in all other prior art, the way in which the quality improves during the download is fixed when the file is created. In the US 5880856 patent, an image is transformed using the wavelet transformation to yield 4 or 5 decomposition levels, with a base decomposition level giving a low-resolution image, and increasingly higher decomposition levels giving higher resolution images. The client receives initially only the base decomposition level data, but the low resolution image resulting from the base decomposition level data gradually sharpens up as higher decomposition levels are received and decoded. Sharpening up of the image occurs as a result of 2 factors: first, as all of the 4 sub-bands which form each decomposition level are received and decoded, the image quality level increases slightly. As successive decomposition levels are received and decoded, the image quality increases more significantly.

One characteristic of the system taught in the US 5880856 patent is that the sub-bands and decomposition levels are all transmitted to clients in the same, fixed order, which is relatively inflexible. As with the Indeo system from Intel Corporation, the server predetermines the quality of the resulting image and the way in which the download progresses, applying the same criteria for all downloads to all clients.

Further reference may be made to Beong-Jo Kim, Zixiang Xiong and William Pearlman, "*Very Low Bit-Rate Embedded Coding with 3D Set Partitioning in Hierarchical Trees*", submitted to IEEE Trans. Circuits & Systems for Video Technology, Special Issue on Image and Video Processing for Emerging Interactive Multimedia Services, Sept. 1998. This paper discloses applying a SPIHT compression scheme to a wavelet-based transform, which yields a bitstream encoding multiple spatial resolutions, with progressive quality ordering within a given spatial resolution, as in the US 5880856 patent. A particular feature is the use of 'flags' inserted by the client decoder into the received bitstream to mark temporal/spatial locations defined by the input resolution parameters. But because the 'flags' are inserted at the decoder, much (and in some cases, all) of the bitstream has to be received and stored at the client, so that considerable bandwidth may be wasted.

One final aspect of conventional systems is that, in the case where an image or sequences is used in a number of locations, caching mechanisms can be used to avoid repeated download of the same data. However, if an image is required at a different resolution or quality, the entire data for the new image must conventionally be downloaded even if a higher quality version is already cached on the client. quality, the entire data for the new image must conventionally be downloaded even if a higher quality version is already cached on the client. Reference may also be made to EP 402954 (Harris Corporation), which discloses a system in which an operator can select one region of interest in a static image and cause it to be sent at one resolution to a recipient device in priority to other parts of the image, which may be at different resolutions. Quality (i.e. resolution in this case) at a given spatial region is fixed and not time dependent; controlling image improvement over time is therefore limited solely to the spatial domain.

### Summary of the Invention

In accordance with the present invention, there is provided a method of delivering a media file to a device on a network in which a server derives the media file from a source file on the server and delivers the media file to the device, the derivation and/or delivery being in compliance with a set of download parameters, the download parameters defining several download and/or media variables; wherein (a) each download and/or media variable relates to a different aspect of the quality of the media file and (b) the download parameters further describe how each of the several download and/or media variables improve over time. Among other things, the download parameters may preferably be used to specify the delivery order of that data and hence the way in which the media quality improves during transfer.

Hence, the present invention is predicated on the insight that it is possible to construct a system with a set of download parameters which enables the server and/or device to set useful download and/or image variables appropriate for a device, so that any device can download and view the media file in the optimal manner for its *own* needs. This is particularly attractive in the context of browsing Web-based media files, such as images, audio and animations and is clearly more flexible than the conventional systems which restrict all clients to the fixed download parameters, uniform for all clients, which are set at a server. The term 'network' should be expansively construed to cover any kind of data connection between 2 or more devices. It may include the Internet. A 'file' is any consistent set of data, so that a 'media file' is a consistent set of data representing one or more media samples, such as frames of video or audio levels. The term 'client' will be used in this specification to mean any device which receives data.

Preferably, multiple download and/or media variables are selected from a set of download and/or media variables which define all variables representing an aspect of the quality of the media file. In this implementation, the system of the present invention offers to any networked media system, an independent and generic solution to the problem of reconstructing media in a quality-controlled manner, irrespective of the number, and types of quality dimensions presented by that media system. It adapts to other quality dimensions becoming available, if necessary. Therefore, in the above example, should control of colour, and/or of the temporal build-up of image frames become available from the media system, then the mechanism defined is immediately able to provide full control of this new functionality.

Preferably the download parameters are either stored on the server or are transmitted to the server by the client before or during the delivery of the media file, or a combination of the two. Download parameters for a client are typically specific to the needs and circumstances of that client. General download parameters may include the following:
(i) the preferred order in which data is to be transmitted;
(ii) the rate at which data is to be transmitted to the client;
(iii) the set of data for the source file that is already stored on the client and does not need to be transmitted; and
(iv) the maximum amount of data to be transmitted to the client;

The download parameters may also define one or more of the following quality dependent download or media variables for an image or sequence of images:
(i) the spatial resolution of the image or images;
(ii) the level of distortion in the image or images;
(iii) the number of displayable images;
(iv) the selection of colour components within one or more images; and
(v) a sub-set of the available frames to be delivered.

The download parameters may also define one or more of the following quality dependent download or media variables for audio:
(i) the distortion of the audio;
(ii) the dynamic range of the audio;
(iii) the number of audio channels to be transmitted; and
(iv) selection of monophonic, stereophonic or quadraphonic audio.

The derivation of the media file may be adapted to take account of one or more of the following:
(i) the data size of the original of the source file
(ii) the bandwidth available to a client.
(iii) the current or predicted loading of the server
(iv) the resources available on the client for decoding and storing the media

Hence, the invention may provide reduced download times for clients requiring lesser quality, enhanced quality for higher-bandwidth users and a progressive image display that satisfies specific client quality requirements. For example, when browsing Web sites for information content rather than images, any images on a site can be download only at low quality initially, so that rapid browsing is not hampered by slow image downloads of marginal interest to a user.

Additionally, any one or more of the download parameters may be altered during the transfer of the media file. Further, any one or more of the download parameters may be altered by the client after the transfer of the media file has completed. In both cases the original data can be retained in which case only the required extra data (if any) is then transferred from the server. In particular, this may be used when transferring a sequence of images to prioritise delivery of data for images that are of particular interest to the client at the time, a process known as localised enhancement. As the client requirements change the download parameters are updated.

The client may also specify the order of progressive transmission. For example an animated sequence may be transmitted such that a low quality version of each frame is made available and played while the high quality data is transmitted. Alternatively the same file may be transmitted such that each frame in the sequence is transmitted at the required high quality before the next frame is transmitted, or the sequence may initially be transmitted at a reduced frame-rate with intervening frames being delivered later in the transmission.

In addition, the client may specify the maximum rate at which the server delivers the data. When a number of images are required this allows the client to simultaneously receive all the images progressively, rather than waiting for one image to load before a transmission starts on the other images.

In one embodiment, the transmitted parts of the media file may be retained at the client and subsequent display of the file at a different resolution, quality or frame rate will then require only limited, additional data to be transferred to the client. Intelligent caching of the data is used to achieve this and allow the image to be re-displayed in an efficient manner even if the client requests different resolution or quality.

The present invention requires that the encoded data from the server has certain special properties, but is independent of any specific encoding scheme. However it works particularly well with wavelet-based schemes and with schemes based on a Codebook approach to managing quality levels within a file.

Hence, in a preferred embodiment, the media file is generated using a wavelet transform, the output of which may be compressed using SPIHT or other forms of compression. The wavelet approach is a particularly powerful technique for providing several useful features: image quality may progressively increase as the sequence of media files is transmitted and the number of displayable frames in a sequence may progressively increase as the sequence of media files is transmitted. A download can also be halted at any time resulting in a displayable image or sequence of images, albeit at reduced quality from the final version.

In another preferred embodiment, the data in the media file is structured by an encoder as a bitstream including several discrete bitstream layers, in which layer labelling information which identifies individual layers is inserted by the encoder, the layer labelling information enabling each client to be sent only those layers which satisfy the download parameters specified by that client. A media server may store the media files, and can distribute to different networked clients bitstreams with different properties depending upon the layers that satisfy the download parameters associated with each client.

The terms 'layer' and 'layer labelling information' are defined and expanded upon in a later section of this specification.

Another aspect of the invention relates to a computer program which when running on a server or encoder enables the server or encoder to perform any of the above methods.

In a final aspect, there is provided a server programmed to deliver to a client on a network a media file deriving from a source file stored on the server, wherein the server is programmed to derive the media file from a source file on the server and deliver the media file to the client, the derivation and/or delivery being in compliance with a set of download parameters, the download parameters defining several download and/or media variables wherein (a) each download and/or media variable relates to a different aspect of the quality of the media file and (b) the download parameters further describe how each of the several download and/or media variables improve over time.

### Brief Description of the Drawings

The invention will be described with reference to the accompanying drawings, in which:
Figure 3 is a schematic representation of the format of the 'chunk' data structure according to the present invention;
Figure 4 is a schematic representing the typical path of a unit of media through the layering system according to the present invention;
Figure 5 is a schematic representation of the labelling mechanism as applied to a wavelet encoding according to the present invention;
Figure 6 is an example of a fragment of a Codebook for the labelling example of Figure 5, according to the present invention;
Figure 7 is a schematic representation of slice filtering as applied to the labelling example of Figure 5 according to the present invention;
Figure 8 is a schematic representation of slice merging as applied to the labelling example of Figure 5 according to the present invention;
Figure 9 is a schematic representation of the labelling mechanism as applied to MPEG encoding according to the present invention;
Figure 10 is an example of a fragment of a Codebook for the labelling example of Figure 9, according to the present invention;
Figure 11 is a schematic representation of slice filtering as applied to the labelling example of Figure 9 according to the present invention.
Figure 12 is a schematic representation of the labelling mechanism as applied to DV encoding according to the present invention;
Figure 13 is an example of a fragment of a Codebook for the labelling example of Figure 12, according to the present invention;
Figure 14 is a schematic representation of slice filtering as applied to the labelling example of Figure 12 according to the present invention.

### Detailed Description

### A. Key Concepts

### Block-based, motion compensated encoding schemes.

There are several examples of block-based encoding schemes that use Discrete Cosine Transform, motion detection and compensation to compress video by removing spatial and temporal redundancy from the source. Of these, the most familiar is MPEG (i.e. MPEG-1 or MPEG-2). MPEG utilises three types of compressed picture: 1-frames, P-frames and B-frames. An I-frame is built up from 16 x 16 pixel square blocks (Macroblocks) of image, represented as a set of spatial frequencies obtained through the Discrete Cosine Transform (DCT), where the low spatial frequencies are generally represented with much greater accuracy than the high spatial frequencies. Temporal redundancy is removed using P (predicted) and B (Bidirectional) frames. A particular Macroblock in a P-frame is generated at the encoder by searching a previous I-encoded frame (or P-frame) for a Macroblock which best matches that under consideration. When one is found the vector is calculated which represents the offset between the two. This motion vector, together with the error between the predicted block and the actual block, is all that need be sent in order to reconstruct the P-frame at the receiver. The third kind is called a B (Bi-directional) frame. B-frames are based on motion vectors obtained by past and future I and P-frames; they provide a smoothing effect, increase the compression factor and reduce noise.

Because P-frames are computed from previous P-frames, errors can build up, so it is necessary periodically to insert I frames. A typical MPEG sequence of frames may look like this:-
I B B P B B P B B I B B P B B P B B I.....

From the point of view of the present invention, MPEG exemplifies three properties of encoded media files that are factors in the design of a system such as is described here.

The first property is that the initial sample structure is preserved through the encoding, i.e., the identity of individual frames is not lost in the encoded bitstream. This means that temporal properties can be manipulated by adding or removing frames in the compressed domain. Secondly, a temporal window is defined (the MPEG Group of Pictures or GOP) within which temporal redundancy is exploited to achieve compression. Thirdly, a complex set of dependencies is defined by the encoding; in MPEG, P-frames require I-frames, and B-frames require I and P-frames, for decoding.

There are other examples of block-based encoding schemes that utilise motion detection and compensation including H.261 and H.263.

### Block-based intra-frame only encoding schemes.

There are other schemes, notably JPEG and DV (as defined in SMPTE 314M-1999), that use block-based encoding without motion compensation. In both JPEG and DV, the basic scheme is to transform blocks of pixels into frequency components using the DCT, quantise the components by multiplying by a set of weighting factors, then variable-length code the result to produce the encoded bitstream. DV, however, introduces the concept of feed-forward quantisation that optimises the compression process prior to compression being applied. To do this the DCT-transformed image is examined and classified into areas of low, medium and high spatial detail. Using this information, different tables of quantisation factors are selected and used according to area, with the object of matching the fidelity with which frequency coefficients are represented, to the frequency response of the human visual system.

A second feature of DV is it's use of block-based adaptive field/frame processing. What this means is that a 64-entry DCT block can represent either an 8-by-8 area of pixels in a de-interlaced frame (an 8-8 DCT), or two 4-by-8 areas in the first and second fields of a frame (a 2-4-8 DCT). The choice between the two is done by detecting motion. The former scheme is used if there is little motion occurring between fields, the latter if motion is detected; this choice being made on a per-block basis.

As with MPEG encoding, three observations can be made about the nature of the encoded bitstream. As before, the sample structure is preserved through the encoding; secondly, a temporal window is defined which, in this case, represents the two fields of a frame. Thirdly, a set of dependencies is defined: for example, dependencies exist between the fields within in a frame wherever 2-4-8 DCT blocks have been generated.

### Subband encoding schemes.

A recent alternative to block-based encoding schemes using a transform such as DCT, is a subband encoding whereby a complete image (rather than small blocks thereof) is processed into a set of frequency/space limited bands, sometimes referred to as *scales*. An example of this is the Wavelet Transform.

The wavelet transform has only relatively recently matured as a tool for image analysis and compression. Reference may for example be made to Mallat, Stephane G. "A Theory for Multiresolution Signal Decomposition: The Wavelet Representation" IEEE Transactions on Pattern Analysis and Machine Intelligence, vol.11, No.7, pp 674-692 (Jul 1989) in which the Fast Wavelet Transform (FWT) is described. The FWT generates a hierarchy of power-of-two images or *subbands* where at each step the spatial sampling frequency - the 'fineness' of detail which is represented - is reduced by a factor of two in x and y. This procedure decorrelates the image samples with the result that most of the energy is compacted into a small number of high-magnitude coefficients within a subband, the rest being mainly zero or low-value, offering considerable opportunity for compression.

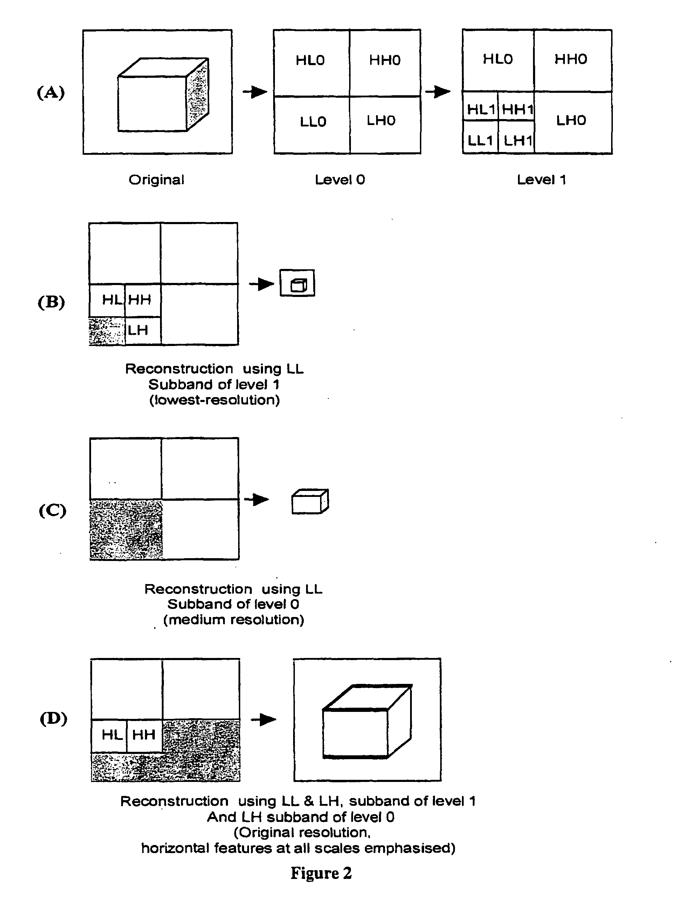

Each subband describes the image in terms of a particular combination of spatial/frequency components. This is illustrated in Figure 2A. Here, a wavelet filter is applied twice to an image. After the first application 4 subbands at Level 0 result, with each subband a quarter the scale of the original; after the second application, four new one-eigth-scale subbands are created. To reconstruct an image fully, the procedure is followed in reverse order using an inverse wavelet filter. The Figure also illustrates the scheme used to name subbands: 'L' and 'H' refer to Low-pass and High-pass wavelet filters which are applied in x and y to generate a subband. Applying the H filter in both x and y gives the 'HH' subband, applying 'L' in x and 'H' in y results in a 'LH, and so forth.

Subbands need not always be fully reconstructed into the original image; they may be combined in different ways to produce a final image to satisfy some set of individual requirements. Three examples are shown in Figure 2. In Figure 2B, the LL sub-band of Level 1 is used as a one-sixteenth scale version of the original. In Figure 2C, the four subbands of Level 0 are inversely transformed to reconstruct a one-quarter resolution version of the original. In the third example, Figure 2D, the LL and LH sub-bands of Level 1 are used, together with the LH sub-band of Level 0 to reconstruct an original resolution image, but with horizontal features at all scales emphasised.

### Image Tree-based Compression.

Tree-based data structures can be used by compression schemes to exploit spatial redundancy in images. A recent development of such a scheme is the SPIHT algorithm; see Beong-Jo Kim, Zixiang Xiong and William Pearlman, "*Very Low Bit-Rate Embedded Coding with 3D Set Partitioning in Hierarchical Trees* ", submitted to IEEE Trans. Circuits & Systems for Video Technology, Special Issue on Image and Video Processing for Emerging Interactive Multimedia Services, Sept. 1998.

The SPIHT algorithm is an effective compression step for use in conjunction with a wavelet transform, since it can efficiently exploit the decorrelation of the input image provided by the transform to get high levels of data reduction. For the purposes of the present invention a key feature of the SPIHT algorithm is its ability to analyse the transformed image in terms of *Significance*. It efficiently locates and partially orders all the samples with respect to bit-significance, i.e., the position at which the highest-order bit in a sample is set. Since this corresponds to the magnitude of the sample, the samples are effectively ordered with respect to their energies, or the contribution they make to the reconstructed object. A significance layer is generated by choosing a bit-position and outputting the value of that bit-position (1 or 0) for all the samples for which that bit-position is defined.

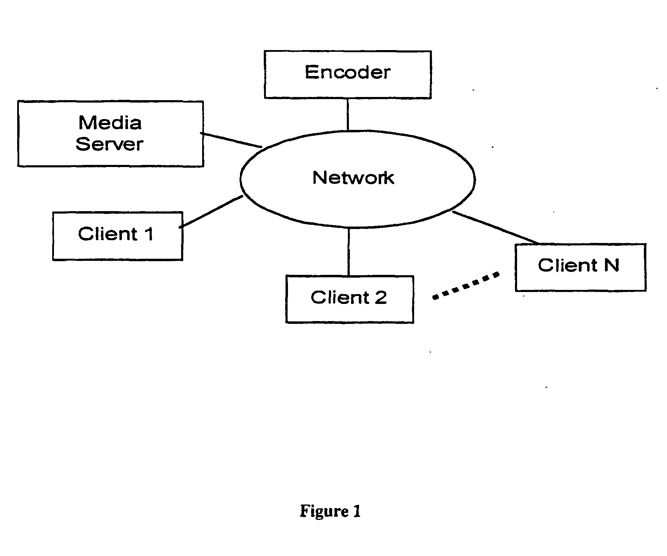

As with MPEG encoding, a set of dependencies between related image components is defined by schemes such as Wavelet/SPIHT compression. In this case, a significance layer can be decoded only if the next highest significance layer can also be decoded. Similarly, to decode a subband (e.g. LH0 in Figure 1) the parent subband (LH1 in Figure 1) must also be decoded.

### 3D Schemes

The Wavelet and SPIHT compression schemes can be extended to the third (time) dimension in a fairly straightforward manner. In this case a sequence of frames are captured and are treated as a 3-dimensional block of data. The wavelet filter is applied along the time dimension as many times as it is along the vertical and horizontal dimensions, resulting in a transformed block comprising a set of spatio-temporal cubes, each of which is a subband. The 3D-SPIHT algorithm represent these subbands in terms of octtrees (as opposed to quadtrees in the 2D case) and generates the bitstream accordingly.

Other compression schemes can also be used in the present invention, as will be appreciated by the skilled implementer.

### B. An Overview

### Image Encoding

The method of the present invention requires, in one embodiment, that image data be encoded in such a way that the resulting data for a frame or sequence of frames can be partitioned into two or more slices using an encoding process. Different slices of the data will encode different parts of the image or sequence of images at different resolutions and quality. It must be possible to decode a sub-set of the compete data set in order to reconstruct the frame or sequence of frames at a particular displayed resolution, quality and frame rate.

By way of preferred example, partitioning of a bitstream generated using a wavelet transform and SPIHT compression into slices is described later on in this specification.

By decoding one or more of these slices of data it is possible to re-construct the frame or sequence of frames at a particular displayed resolution, quality and frame rate. In general, the quality of the resulting frame or sequence of frames will depend on the total amount of data that is being decoded. The choice of slices that are used to re-construct the frame or sequence of frames can be made on the basis of the desired resolution, quality and frame rate. Also, it is possible to improve the quality, resolution and frame rate of an existing frame or sequence of frames by adding more data sections. This process is known as *enhancement*. (In the wavelet-based example given later, we use the term *refinement* for this process.) Typically, enhancement occurs by adding new slices to existing layers or by adding the first slices from a new layer; possibly, but rarely, it may involve adding an entire new layer (i.e. all the slices for that layer).

### C. System description

The system capable of performing the method of the present invention comprises an Encoder, a Network, a Server and N clients, as shown in Figure 1.

A Encoder compresses the incoming media, structures it into layers and adds layer labelling information as described in the next section, prior to transmitting it as a bitstream over a digital communications network, to be stored on the Server.

In Figure 1, there are N clients, each of which engages in a session with the media Server during which media content and control information are transmitted. For each client a control channel to the Server is maintained which allows that client to request that media be transmitted to it. The types of requests that can be made include (but are not limited to) the following:-
- Seek to a particular point in the media file.
- Transmit a media clip at a particular quality.
- Transmit extra information to improve in a specified way the quality of the media at the Client.

These requests support a variety of useful application-level functions at the Client such as video previewing using fast-forward and rewind, single-frame stepping forwards and backwards, and freeze-frame. For example, in a media browsing application, a low-quality version of the media may be sent to the client with very little latency, to allow the user to start work immediately, for example, on rapidly scanning through a file to locate items of interest. Initially the user may not so much be interested in the absolute quality of the media, as in the responsiveness of the system to requests to move rapidly from one point to another. Having found an item of interest the application may then determine that this particular section of the media is to be rendered at greater quality and issue an appropriate request to the Server. The Server calculates which extra layers should be delivered to improve the media information in the way required and transmits only those layers. Note that no extra processing of the media file is required during this procedure other than to locate and send the appropriate sets of data. Note also that the quality improvement may occur in a number of ways, including:
- Increasing the temporal resolution of the media (i.e., for video, allow more individual frames to be resolved).
- Increasing the spatial resolution of the video.
- Increasing the sampling frequency of the audio.
- Decreasing the degree of distortion of the media..

Central to the working of this scheme is the mechanism used to convert a media file in any encoding format, including those described in the preceding section, into a layered format with properties that support the operations described above. This is the purpose of *Layer Labelling* as described in the next section.

### D. Description of Layer Labelling

### Overview

A Layered bitstream is built out of a media encoding by splitting it up into packets (called ***chunks*** here) in a manner determined by the encoding type, and appending ***Labels*** to the chunks that uniquely describe their contribution to the reconstructed file. In order that distributed tools can be built and configured to understand the formats of many layered bitstreams in a distributed environment, ***static*** signalling information (constant throughout a stream's lifetime) is made available, either as a reference to a globally available file, or as data sent once in the bitstream. For configuration information that must vary within the stream, provision is made for ***dynamic*** signalling information to be carried in the bitstream.

To be successful the labelling scheme must do three things well:
- Efficiently and controllably allow parts of a media file to be selected to obtain a particular quality of service to satisfy media quality, bit-rate or latency requirements.
- Efficiently support the location and transmission of those parts of the media necessary to reconstruct a particular item to a specified quality.
- Encapsulate the underlying media encoding and hide complex details while offering a uniform, media encoding-independent, layered view of the file.

The first requirement is addressed through the concept of a ***Filter*** that specifies which parts of the file are to be selected for transmission. The second requirement needs in-band ***signalling*** information to describe and delineate the layered structure within the bitstream. The third requirement is addressed through an indirection mechanism that maps the subtleties of a particular encoding to the uniform layered view. This indirection mechanism is termed the ***Codebook*.** A Codebook is defined for every new encoding scheme, or variations of existing schemes with new parameters.

### Layer Labelling Format

This section defines the format of the layer labels used in the present invention to convert a media file to a layered stream format. Streams are stored and transmitted as contiguous groups of chunks, each with a chunk header defining the length and type of the chunk. Some chunk types are reserved for carrying data (termed slices), whereas others are used for signalling.

Extra configuration information for these streams, such as encoding format and slice dependencies, can be associated with the data stream. The static portion of this information can be stored externally, or in-band using signalling chunks; dynamic information is always stored in-band.

### Chunk Header

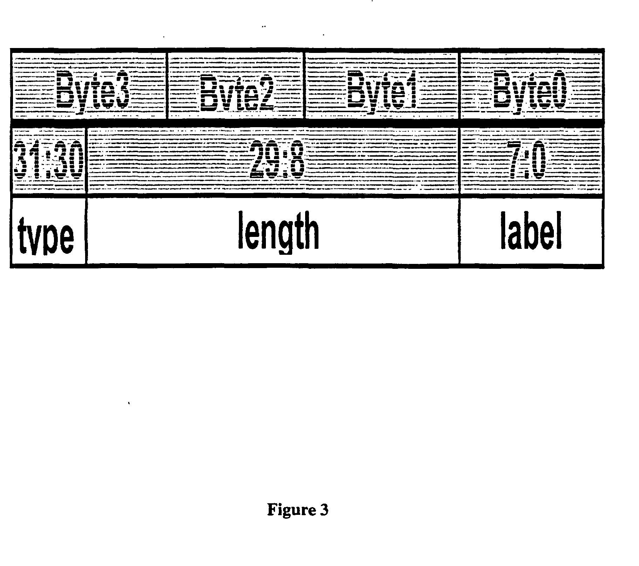

All chunks are introduced by a chunk header, the format of which is illustrated in Figure 3. All chunks, irrespective of their type, are introduced by one of these headers. The result is a data stream whose structure is fixed, while still allowing room for expansion in the future.

### Type

The 2-bit type field is used to distinguish between 4 independent sets of chunk types. (The issue of independence is important, since there is no way to specify a dependency between two labels belonging to different types.) The following type values are currently defined:
*data chunks (slices)*
*signalling chunks*
***Length***

The 22-bit length field gives the length of the chunk in bytes, including the header. A chunk containing no payload information (i.e. just a header) would, therefore, have a length of 4.

### Label

The 8-bit label field is the layer label for the chunk. The interpretation of the label is dependent on the type field (see above), so the header format allows for 4 sets of 256 labels.

### Terminology

Data chunks (equivalently termed *slices)* are used to encapsulate a stream of multimedia data. The labels attached to the slices are used to indicate the nature of the slice contents and their dependency relationships with other slices in the stream. Signalling chunks can be used within the stream to pass extra information about the data, such as details about how it has been encoded or filtered.

### Slice

The manner in which the slice label allocation is done depends on the exact nature of the multimedia data being encapsulated. There are a set of basic schemes which are mutually agreed between all the tools, but new allocation schemes can be added in order to tailor the system to suit different situations. The only restrictions are:
- slices within a data stream must all be labelled using the same allocation scheme;
- slices must be labelled uniquely with respect to the data they contain; and
- label allocation must be done in slice dependency order.

The first restriction is self explanatory, but the others merit further discussion. The slice label is taken as an indication of the data contents of the slice, and is used by the system to separate and merge the slices to obtain data streams of differing quality. In order to allow the stream decoders to be stateless, the slice label must identify uniquely the actual data contents. As a result, slices which are too long to be encapsulated as a single chunk must be split in such a way as to enable the decoder to determine which is the base data and which is the continuation information.

The slice labelling must also reflect the dependency hierarchy, with all slices having numerically lower label values than those which depend on them. This means that when the slices of a stream are encoded in dependency order, the label values increase in line with the progress through a dependency unit (see context below). Not only does this simplify the job of merging the slices from data streams which have been split previously, but also allows the boundaries between contexts to be implicit (if a slice label is not numerically greater than its predecessor, then it must belong to a new context).

### Context

A group of slices which are related by dependency (either spatial or temporal) is called a context. As described above, the label values for the slices within the context must be arranged so that they are in numerically increasing order. This usually allows the boundaries between contexts to be detected implicitly, without the need for an explicit signalling chunk. Based on the label allocation scheme described above, slices within the context will also, therefore, be arranged in dependency order such that slices always precede those which are dependent on them.

Because of the number of slice labels available (and the restriction of unique slice labelling), it follows that the maximum number of slices which comprise a context is 256. The dependency hierarchy for the slice labels is defined in a code book (see below) and is fixed for the duration of the data stream. Note that it is not mandatory for slice labels to be allocated consecutively (i.e. gaps in the allocation scheme are allowed); nor is it essential for a specific slice label to be present in all contexts.

As well as grouping together slices which are related by dependency, contexts have a very important rôle in defining the boundaries at which editing can be performed. There is no need for explicit signalling chunks to determine valid edit points.

Contexts are assumed to be separated from their neighbours in the temporal domain, and be independent of them; in other words, when contexts are extracted from the data stream, each should be capable of being decoded as a stand alone entity. The one exception to this is exemplified by encoding schemes such as MPEG which have temporal dependencies between adjacent Groups Of Pictures. This is handled by associating an "overlap" with each context allowing temporal units (see sample below) to be marked as dependent on the immediately preceding context.

The overlap value, stored in the media header (see below), defines how these inter-context dependencies are handled: an overlap value of n implies that the first n samples of a context are dependent on the previous context. Since the normal situation is for contexts to be temporally self-contained, the default overlap value is zero. In the case where it is not zero, the slice dependency hierarchy must reflect the inter-context peculiarities of the encoding scheme, with "phantom" dependencies being added if necessary.

### Sample

Multimedia data streams are usually represented as a sequence of discrete units, each with a well defined temporal position in the stream. This is particularly true with video data, which is usually modelled as a set of separate frames (even though the frames may have been reordered and grouped in the encoding process, such as with MPEG). The data streams preserve the natural temporal unit of the encoding scheme, with each discrete unit being termed a sample. Whether a context contains a single sample or a group of samples is dependent on the encoding technique used, but specific techniques usually follow a very rigid repeating pattern. By default, therefore, each context is assumed to contain a fixed number of samples, with the context spacing (samples per context repeat count) defined in the system header (see below).

The distinction between contexts and samples is important when contemplating the temporal dependencies of the multimedia data (such as a 3-D Wavelet/SPIHT scheme) and the ability to perform temporal decimation (such as playing every fourth frame of a video sequence). A context contains the smallest number of samples which make up a temporal encoding unit (GOP for MPEG, GOF for Wavelet/SPIHT), with the spatial and temporal dependencies being handled in exactly the same manner. Within the context, each slice is given a temporal priority (see below) which allows for intelligent decimation of the temporal sequence, but does not in itself imply any kind of temporal dependency.

### System Header

The system header is used to define the stream attributes which are relevant at the system layer only. Basically, this means parameters which are needed by the Server to provide the level of service required of them. For example, the default context spacing is needed in order to construct the mappings between contexts and samples.

### Media Header

The media header is used to define the stream attributes which are relevant at the media layer only. This means parameters which are needed by the stream decoder in order to make sense of the data stream, but which are not required by the Server. Examples which fall into this category are: the horizontal and vertical resolutions of a video encoding; the inter-context dependency overlap; and a reference to the code book which has been used for the encoding.

The reason there is a separate media header chunk, rather than combining the information with that in the code book is because code books are generic in nature and tend to be independent of the raw properties of the original media. The media header fills in these details for a specific recording, thus greatly reducing the number of code books which are required by the system as a whole.

### Code Book

The code book is used to define the dependency and quality relationships of the slices within a context, and is necessary in order to construct a filter for a data stream. Irrespective of whether the dependencies are spatial or temporal, the relationships between the individual slices can be represented as a simple hierarchy: each slice type (i.e. slice with a specific label) has a predetermined set of other slice types on which it is dependent. The nature of the hierarchy is, obviously, dependent on the labelling scheme used; but the code book technique allows a great deal of flexibility providing the basic rules of slice labelling are not violated (see above).

In the context of the code book, "dependency" has the following meaning. For one slice to be dependent on another, it must be impossible to decode the slice without it. (This is true, for example, with MPEG video where the I frame is necessary before the first P frame can be decoded.) Note that this dependency relationship says nothing about the desirability of slices when it comes to producing results of acceptable quality.

As well as defining the dependency hierarchy, it is the job of the code book to store a mapping between the individual slice values and the "quality" of the decoded data stream which include those slices. The stream quality is, by necessity, a vague and subjective factor compared to the strict slice dependencies described above; indeed it is likely that there is more than one quality dimension. For example, 3-D Wavelet/SPIHT encoded video can be thought of as having four quality axes: scale (image size), fidelity (image quality), colour and temporal blur.

The bulk of the code book comprises a series of tables (one for each slice label) containing the dependency data, the temporal priority and a set of quality parameters, one for each quality axis. The number and type of quality axes defined is dependent on the nature of the multimedia data and the encoding scheme used. To simplify matters, three important restrictions are applied to quality axes:

Quality axes are assigned names (or quality tags) which have global significance. Code books which employ the same quality tag must use the same allocation scheme when it comes to quality parameters for the relevant axis.

Quality parameters are always specified with regard to the highest quality (unfiltered) version of the data stream. In the case of video, for example, this allows a common code book to be used irrespective of the image size.

The quality parameters themselves must, where practical, be independent of the actual encoding scheme used. For example, the scale parameters for video data might represent the width or height of a scaled image compared to the original, assuming an unchanged aspect ratio.

The code book header contains the list of quality tags for which quality parameters will be found in the tables which follow. This, combined with the restrictions outlined above, allows for filter creation to be done in a manner which is entirely independent of the multimedia data type and encoding scheme. A filter created using a quality axis which is either absent or unspecified always results in slices being unfiltered with respect to that axis.

### Temporal Priority

It is often necessary to decimate a data stream, either to reduce the bandwidth requirements or to play it at faster than normal rate. Given the different data encoding schemes, it is not always sensible to work with naïve sub-sampling schemes such as "one sample out of every four". There are two reasons for this.

The inter-slice dependencies of the relevant samples may prohibit simple decimation. This is true, for example, with MPEG video, where there is a complex web of temporal dependencies between the I, P and B frames.

When attempting to maintain a cache of slice data and ensure effective use of available bandwidth, it is essential that repeated (or refined) sub-sampling requests should be carefully orchestrated so as to maximise the data overlap.

Accordingly, each slice in a context is assigned a temporal priority which is used to control decimation. For example, in MPEG video, slices belonging to the I, P and B frames would be allocated temporal priorities of 0, 1 and 2 respectively. It is these temporal priorities which are used when performing temporal filtering below the level of the context.

### Signalling Chunks

The signalling chunks are used to identify and annotate the data chunks in a data stream. Whether they are stored together by Servers or generated on the fly at the time of delivery is an implementation detail which is outside the scope of this document. The signalling chunks fall into three distinct categories: static, dynamic and padding.

### Static chunks

The static chunks define parameters which do not change during the lifetime of the data stream. This includes the definitions of the basic default values which apply to the whole stream, such as the identity of the code book which has been employed to generate the data slices. Since these chunks are static, there is no necessity for them to be included as part of the data stream: it is just as valid for the information to be sent out-of-band or, as in the case of re-usable code book tables, by reference. If they are transmitted or stored in-band, however, they must be unique, precede the first data slice and be stored in numerically increasing opcode order.

### Dynamic chunks

The dynamic chunks define those parameters which vary depending on their position within the data stream. This includes filtration information, since the filters used to generate the stream can vary as the slices are delivered. It also includes all the variable context and sample information, such as the indication of "seek" operations and the handing of contexts with a context spacing which is not constant. Dynamic chunks, by their very nature, carry positional information within the data stream, and hence must always be sent in-band. Where present, dynamic chunks are only valid at context boundaries.

### Padding chunks

The padding chunks have no semantic influence on the data stream, and hence can be positioned at any chunk boundary.

### Static Signalling Chunks

### System Header

- **Type:**: Static
- **Opcode:**: 0x00
- **Contents:**: Information which is specific to the system layer only (Media Server), and is not required to filter or decode the data stream. The parameters are:
*context spacing*
- **Format:**: Name/Value pairs.
- **Status:**: Mandatory.
- **Position:**: Out-of-band, or in-band before first data slice.

### Media Header

- **Type:**: Static
- **Opcode:**: 0x01
- **Contents:**: Information which is specific to the media layer only (Decoder), and is not required for the operation of the Media Server. The parameters are:
*original media parameters*
*context dependency overlap*
*code book reference*

**Format:** Name/Value pairs.
**Status:** Mandatory.
**Position:** Out-of-band, or in-band before first data slice.

### Code Book

- **Type:**: Static
- **Opcode:**: 0x02
- **Contents:**: Information which is specific to the generation of slice filters only, is not required for the operation of the Media Server or Decoder.
*quality tag list*
*slice dependency information*
*slice quality information*
*slice temporal priority information*
- **Status:**: Mandatory.
- **Position:**: Out-of-band, by reference, or in-band before first data slice.

### Meta Data

- **Type:**: Static
- **Opcode:**: 0x04
- **Contents:**: Information which is pertinent to the data stream, but which is not required for its storage, filtration or transmission. Examples are:
*date, time & location*
*edit history*
*copyright notice*
- **Format:**: Name/Value pairs.
- **Status:**: Optional.
- **Position:**: Out-of-band, or in-band before first data slice.

### User Data (1,2,3,4)

- **Type:**: Static
- **Opcode:**: 0x05, 0x06, 0x07, 0x08
- **Contents:**: Private information, added into the data stream by the generator of the encoding, but which is not interpreted by the system in any way.
- **Format:**: Opaque byte array.
- **Status:**: Optional.
- **Position:**: Out-of-band, or in-band before first data slice..

### Dynamic Signalling Chunks

### Baseline

- **Type:**: Dynamic
- **Opcode:**: 0x80
- **Contents:**: Information regarding the stream's current position with respect to the context and sample sequence numbers, and is usually used to indicate a "seek" operation within the data stream. Has two parameters, either of which can be omitted if the value can be inferred from the stream position:
*context sequence*
*sample sequence*
At the start of a data stream, unless otherwise specified, it is assumed that the context and sample sequence numbers both start at zero.
- **Format:**: 64-bit little-endian binary.
- **Status:**: Optional.
- **Position:**: In-band at context boundaries.

### Context Start

- **Type:**: Dynamic
- **Opcode:**: 0x81
- **Contents:**: A *context spacing* for the immediately following context.
- **Format:**: 32-bit little-endian binary.
- **Status:**: Optional. Only necessary if the *context spacing* is different to the default.
- **Position:**: In-band at context boundaries.

### Context End

- **Type:**: Dynamic
- **Opcode:**: 0x82
- **Contents:**: None.
- **Format:**: n/a
- **Status:**: Optional. Only necessary if context boundary cannot be determined by simple comparison of slice type values.
- **Position:**: In-band at context boundaries.

### Filter Definition

- **Type:**: Dynamic
- **Opcode:**: 0x83
- **Contents:**: Used to encode stream filtration information for the data slices which follow. It takes the form of a pair of bit sequences (possibly compressed) indicating which data has been filtered out of the subsequent stream.
The *slice mask* indicates which of the 256 possible slice types have been filtered out of the data stream. It does not imply that the remaining slice types will be found in the stream; nor does it guarantee that the slices which are present conform to the dependency criteria specified in the code book.
The *context mask* is used to indicate which whole contexts have been filtered out of the data stream. Each context has a unique position in the sequence, and mask refers to the position value modulo 240 (a number chosen because of its numerical properties, being the common multiple of 2, 3, 4, 5, 6, 8, 10, 12, 15, 16, 20, 24 and 30). Unlike the slice mask, the context mask can be used to determine which contexts are present and which are absent. In the case of inter-context dependencies, however, there is no guarantee that the relevant information is actually present.
- **Status:**: Optional.
- **Position:**: In-band at context boundaries

### Padding Signalling Chunk

### Padding

- **Type:**: Dynamic
- **Opcode:**: 0xff
- **Contents:**: Opaque byte array. Padding chunks may be necessary in the case where fixed bit-rate streams are encoded or specific byte alignments are required. They can also be used to re-label a slice in place for data filtration experiments.
- **Format:**: Opaque byte array.
- **Status:**: Optional.
- **Position:**: In-band.

### E. Layer Labelling, Filtering, Merging and Codebook Examples.

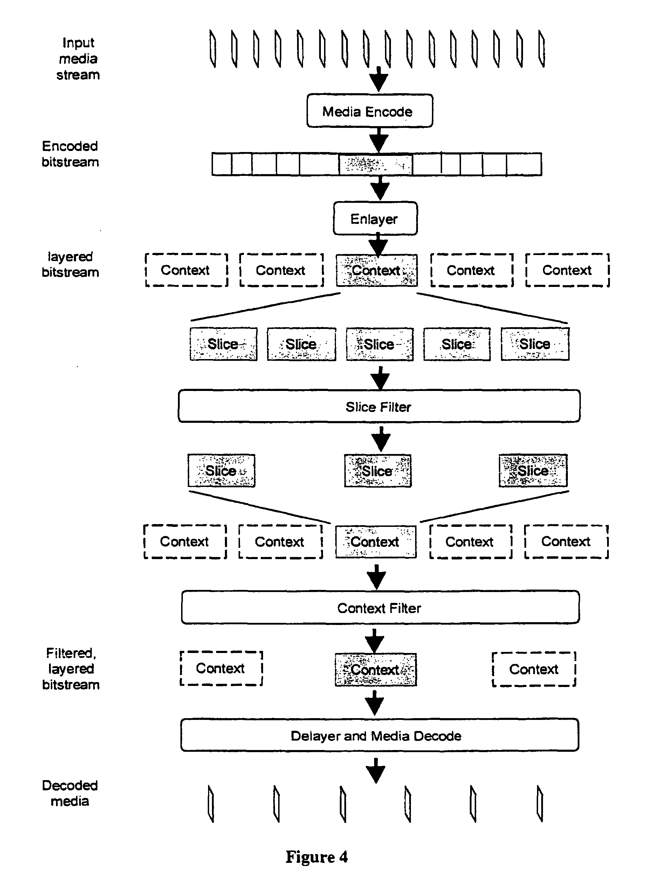

Figure 4 gives an overview of some typical transformations undergone by a media file as it is layered, filtered and decoded. In particular, the Figure shows the two styles of filtering that are possible: filtering at the Slice level (within a dependency unit), and filtering at the Context level (across entire dependency units). Slice-level filtering can be used to change the colour depth, spatial resolution, fidelity or temporal resolution of the media. Context-level filtering has a coarser 'grain' and is designed mainly to support temporal decimation of the media.

### F. Wavelet Example

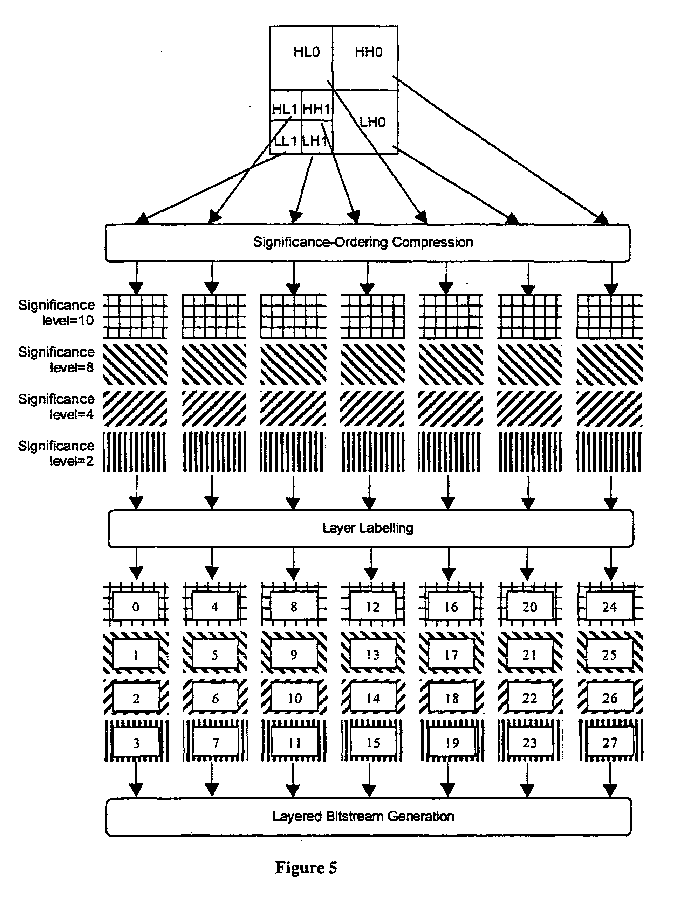

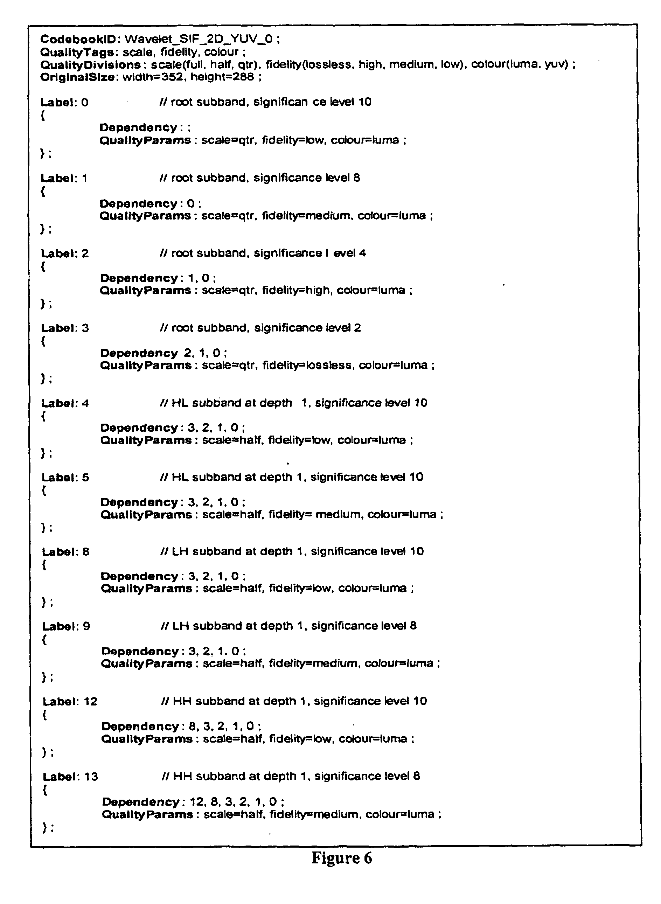

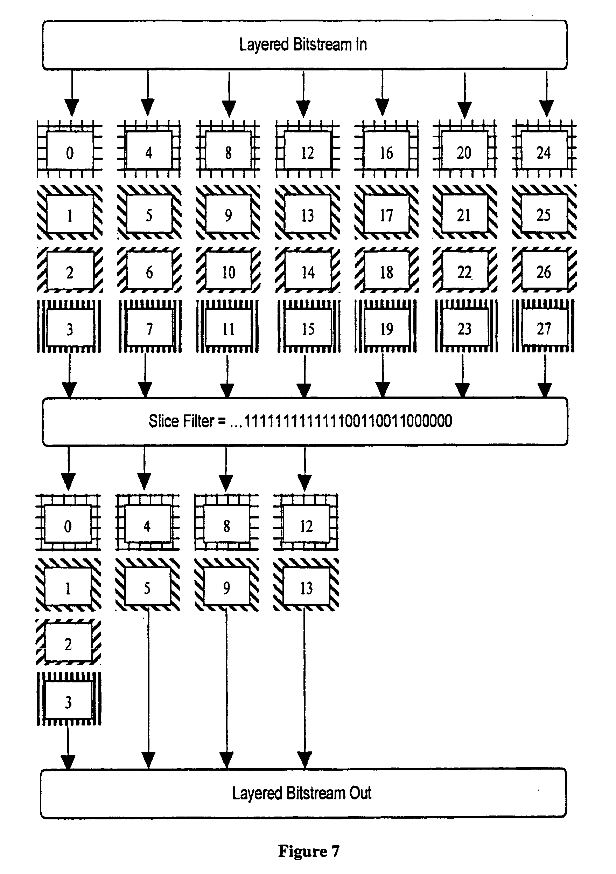

Figure 5 shows a more detailed example of labelling Wavelet/SPIHT-encoded data. A depth 2 wavelet decomposition with four significance levels results in a Context of 28 slices. A fragment of one possible Codebook for this encoding is shown in Figure 6 and an example of how the Codebook is used to generate a Filter is illustrated in Figure 7.

Referring to Figure 6, the header of the Codebook includes a **CodebookID** field for self-identification, a **QualityTags** field that specifies the quality axes available for this encoding, a **QualityDivisions** field that specifies, using plain-text names, how those axes are labelled, and an **OriginalSize** field that specifies the spatial resolution of the original media, to provide a baseline for scale calculations.

Each encoding scheme may have its own individual Codebook defined, but any Codebooks that share common **QualityTags** entries must use exactly the same **QualityDivisions** scheme to label the quality axes. Textual names are used to map properties of the different media encodings, which may be similar but not identical, into a single quality scheme. This results in an important capability of the system: that an application can be written to manipulate media using these names in a manner that is completely independent of encoding format.

In the Figure it is assumed that a file manipulation tool wishes to extract a medium fidelity, monochrome, half-scale version of a 352 by 288 video encoding. To accomplish this the Codebook is searched (in practice this is optimised using pre-calculated indices) for the highest-numbered label with the required value of **QualityParams,** i.e., "scale=half, fidelity=medium". Having found this label (13) all the dependent labels are visited until the dependency graph is completely resolved. As this proceeds the bit mask representing the Slice Filter is built: a 'zero' at bit position *n* indicates that the slice with label (*n*) is required in the filtered bitstream, a 'one' means that it should be absent. The result of using this filter is illustrated in Figure 7.

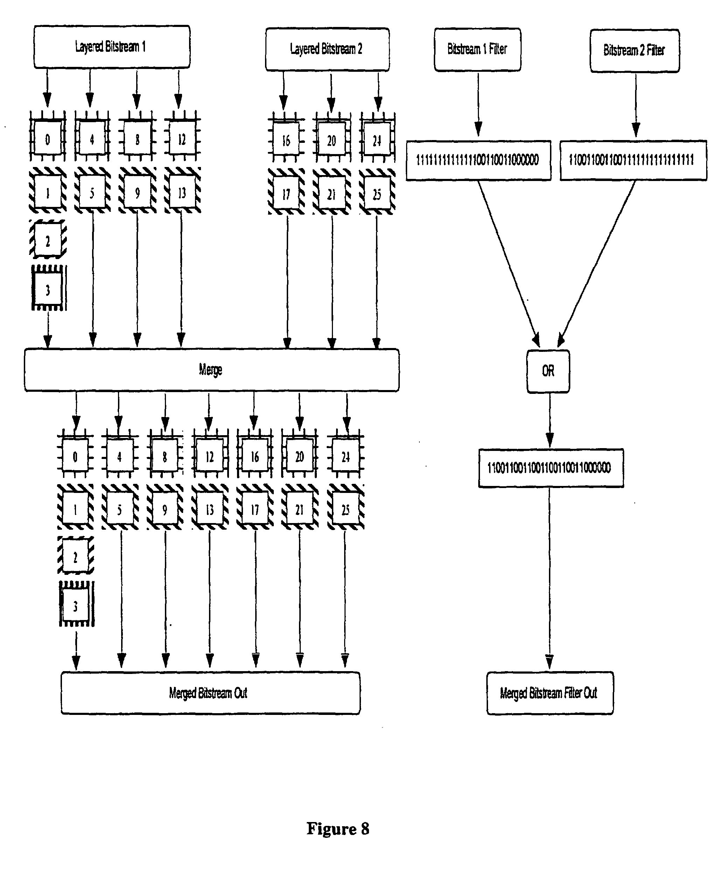

Filtered slices are preceded by a Filter Definition signalling chunk which holds the slice mask used to perform the filtering. This value can be used by downstream tools that require knowledge of the stream characteristics, for example, to initialise a decoder, or set up memory areas for buffering. The Slice Mask is also used when filtered bitstreams are merged to determine the slice content of the resulting stream, as illustrated in Figure 8. Here, a refinement stream containing slices 16, 17, 20, 21, 24 and 25 is merged with the half-scale, low-resolution filtered stream of Figure 7 to obtain a full-scale, low-resolution encoding. The slice mask for the combined stream is obtained using a simple bitwise OR of the two input Slice Masks.

### G. MPEG Example

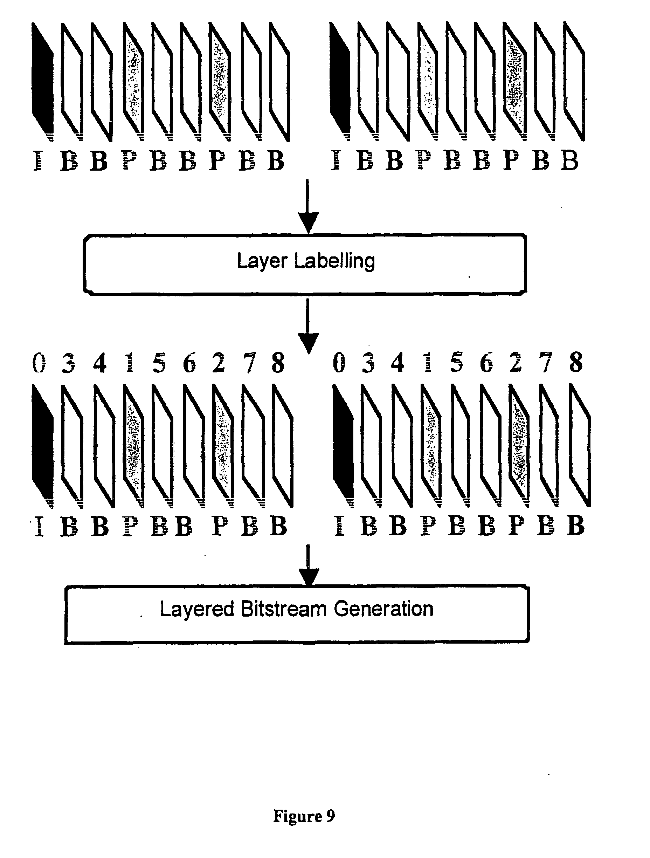

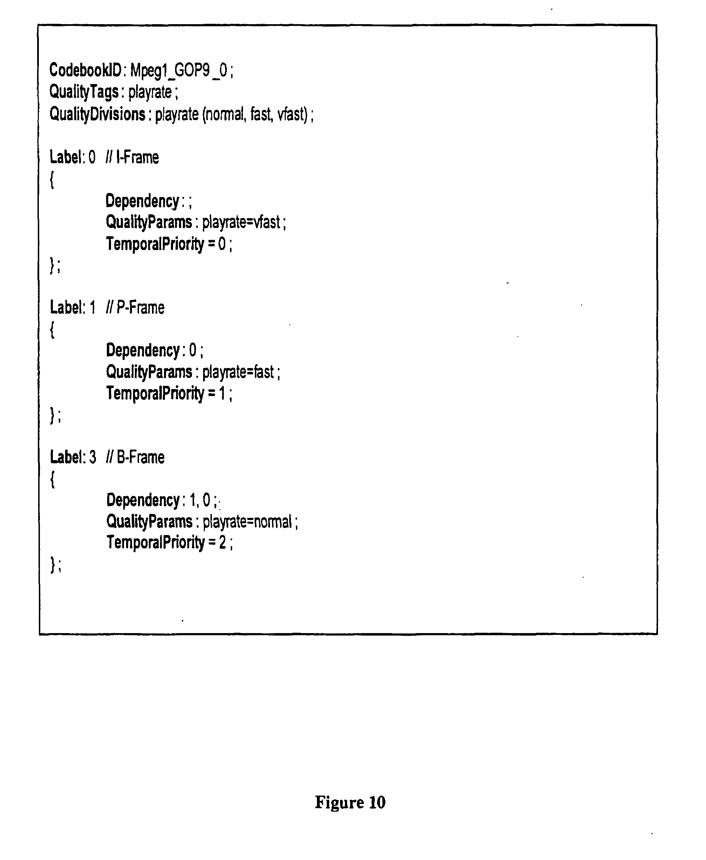

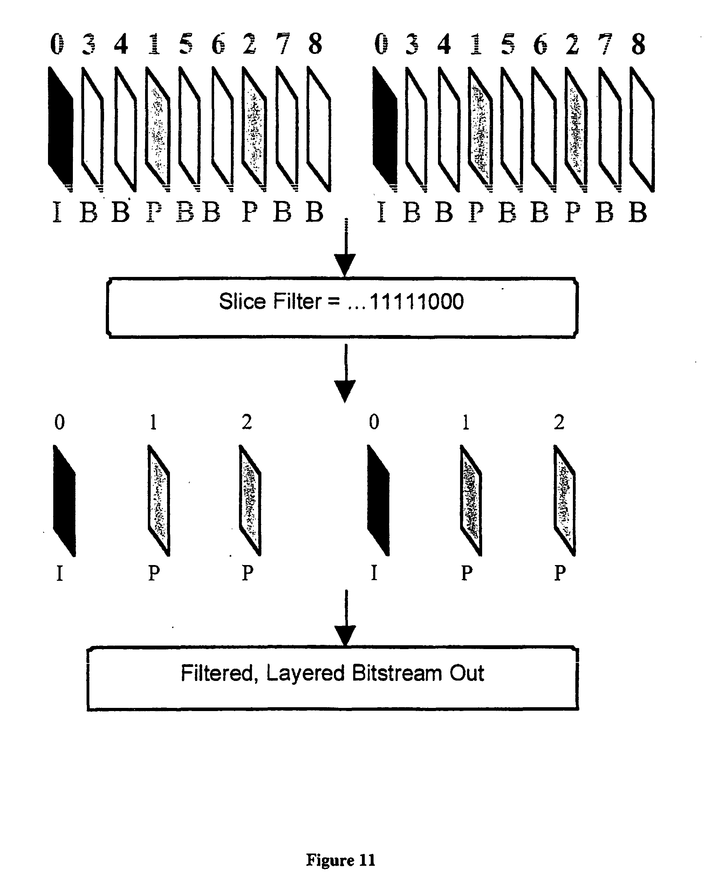

Figure 9 shows an example of labelling MPEG-encoded data, and Figure 10 shows a fragment of the corresponding Codebook. In this example it is assumed that a file manipulation tool wants to generate a Filter that operates on slices in such a way as to generate a fast playback stream. In this encoding a Slice represents an MPEG frame, so the effect of the Filter is to decimate the stream temporally. From the Codebook the tool resolves the dependence hierarchy for the QualityParams playrate=fast and builds the Slice Filter as described above. The result of applying the Filter is shown in Figure 11.

### H. DV Example

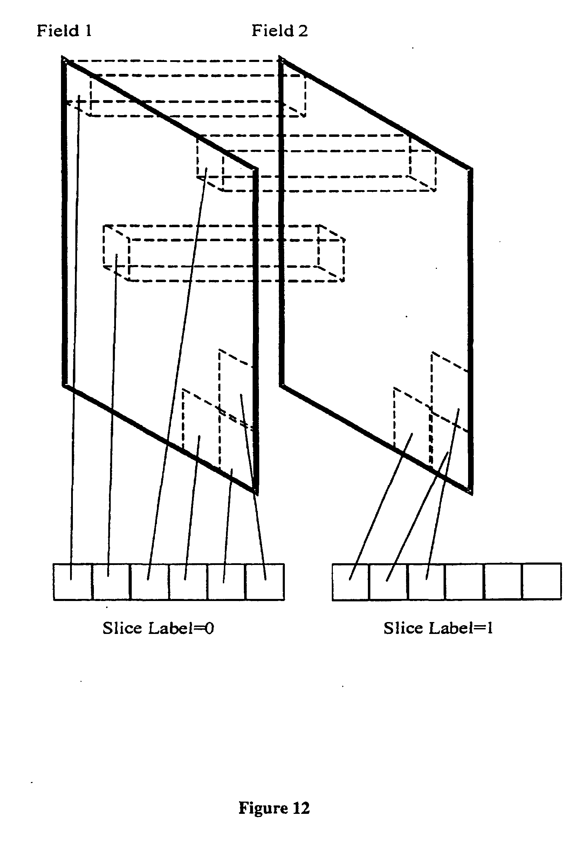

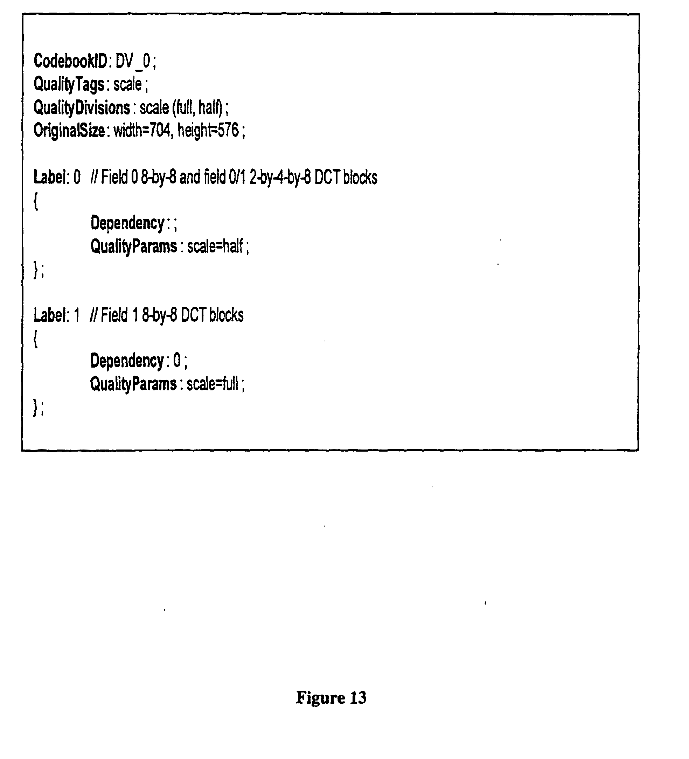

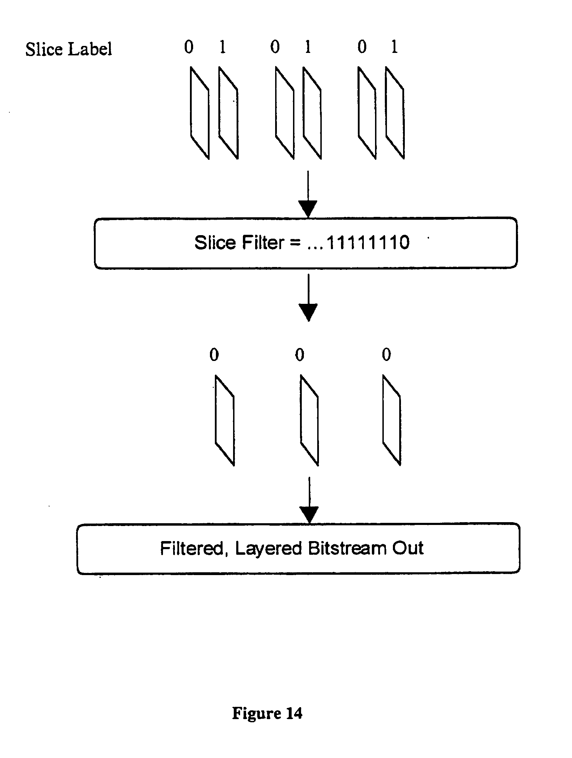

Figure 12 shows an example of labelling DV-encoded data, and Figure 13 shows a fragment of the corresponding Codebook. In this example the DV-encoded data is labelled according to the following scheme: data that represents both 2-by-4-by-8 and 8-by-8 DCT blocks from field 1 are assigned slice label 0; data that represents 8-by-8 DCT blocks only from field 2, are assigned slice label 1. This results in two layers, a base layer half-vertical resolution derived from field 1, and the refinement layer that produces the full-resolution reconstruction. Figure 14 illustrates the result of applying a Filter that selects label-0 Slices only, so producing a half vertical resolution video stream.

### I. Client-driven image delivery

The method described in this specification allows a client to specify information about an image that it wishes to receive and have the server deliver the appropriate sections of the image data at the appropriate time. The client can specify (amongst other parameters) the order of delivery, the image size, the image quality, the frame-rate, the data rate and the total amount of data that is required. The server will use this information to decide which sections of the image data should be sent to the client and at what rate. The Client will set the parameters on the basis of user requirements and the current state of the client. For example, the image quality may be explicitly set by the user; the displayed resolution may be determined by the size of the display window that has been selected; the set of sections to be omitted may be determined by the sections that are available via an alternative mechanism, such as (but not restricted to) a data cache in memory or on disc. In the example of an image embedded in a Web Page, some parameters may be specified within the web page itself or in an associated page

### J. Download Parameters

When a client requests the delivery of data it specifies a set of *download parameters* that may include any of the following:
- Parameters that specify the relative importance of the various Quality Parameters for the media, for the purpose of determining the progressive order in which the data is to be transmitted.
- Other parameters that specify the progressive order in which the data is to be transmitted
- Parameters that specify the required scale (or spatial resolution) of the final sequence of images
- Parameters that specify the required quality of the final sequence of images
- Parameters that specify the required frame-rate of a sequence of images
- Parameters that specify the colour requirements
- Parameters that specify the frame or set of frames that are required
- Parameters that specify one or more regions of interest within the image that are required
- Parameters that specify the rate at which the data is to be delivered
- Parameters that specify the set of data that is already held by the client and therefore does not need to be transmitted.
- The maximum amount of data to be transmitted
- Parameters that specify the allowable value of any of the quality parameters specified for the media.

### Server selection of slices

The server uses the download parameters to deliver the appropriate data to the client. This process involves the following steps:
1) The server determines the total set of slices to be transmitted
2) The server determines the order in which the slices are to be transmitted
3) The server delivers the slices in order, at the specified rate

### Determining the set of slices

The server selects the slices that need to be transmitted on the basis of some of the download parameters. It starts with a complete set of slices and then discards sections on the following basis:
- It discards all layers that code colour components that are not required.
- It discards all slices that code only for frames that lie outside the specified set of frames.
- It discards all slices that code only for frames that are not required for the selected frame rate.
- It discards all layers that code for a quality greater than the required quality that have parent layers that code for at least the required quality.
- It discards all layers that code for a scale greater than the required scale that have parent layers that code for at least the required scale.
- It discards all slices that are marked as already available on the client.
- It discards all slices for which any quality parameter lies outside the allowable range specified in the download parameters for that parameter.

Other selection criteria may also be applied at this point.

### Ordering the slices

Having selected the required slices, the server then orders the slices for delivery. The slices are sorted according to a list of criteria. The relative priority of these criteria is specified by the client in the download parameters.

Slices are ordered by assigning a score to each slice. This score is calculated on the basis of the value for each available quality parameter and the importance assigned to that quality parameter in the download parameters.

The following parameters can be used to score a slice:
- The scale/resolution available which the given slice.
- The distortion present within the given slice.
- The frames that are encoded by the given slice.
- The region of interest within a frame that is encoded by the given slice.
- The colour components encoded by the given slice.
- Any other quality parameter specified for that slice

Other ordering criteria may also be applied at this point.

The slices are ordered according to the score for each slice. Finally, the slices are ordered to ensure that the parent of a slice always appears before the slice itself, to ensure that every slice can be decoded as soon as it arrives.

### Delivery of the slices

The server delivers the selected slices in the selected order to the client at the data rate specified in the download parameters.

### Client handling of received data

When at least one complete slice has been received by the client it may decode and display the image or images encoded by those slices. The slices are presented to the decoder which then generates the decompressed data. The client may elect to do this on a single occasion when all the requested data has been delivered. Alternatively it may elect to decode the data when only a partial section of the data has been delivered, in order to implement the progressive download feature. A slice cannot be fully decoded unless the specified parent slices are also available. Therefore a client may elect to decode only the sub-set of the available slices for which this condition applies.

In the case where the data connection from the server to the client is unreliable, it is possible that some of the requested slices may not arrive, or may arrive in a corrupt form. In this case the client may change the download parameters to request the re-transmission of the relevant slices.

### Changes to download parameters

The client may change the download parameters at any time. The server will re-calculate the new set of required slices, allowing for the sections that have already been delivered to the client If a slice is currently being transmitted, transmission may be completed unless the slice no longer appears in the required list, in which case it may be terminated. If the transmission is terminated the data stream marked accordingly to notify the client of the incomplete slice.

If a sequence of images is being delivered for playback the user may wish to concentrate on a particular image or series of images within the sequence. The client may request the delivery of the data for these images ahead of the data for other images, providing localised enhancement of the sequence of images.

### Extension of the invention to other media types

The application of the invention as presented is not limited to media files representing images. It may be applied to other static or continuous media formats. The extension of the invention to cover a new medium may require the introduction of new quality parameters to the download parameters. This allows the slices to be selected on the basis of new criteria. The underlying mechanism of the invention is unaffected. In particular, the mechanism may be applied to audio files encoded in an appropriate way.

### Extension of the invention to audio

The extension of the invention to cover audio involves the use of different quality parameters within the set of download parameters. The quality parameters that relate to image-specific features, such as colour, are no longer required. Other quality parameters can be adapted to the new medium. For example, the distortion parameter can be used to specify the quality of the sound that is heard rather than the quality of the displayed image. New quality parameters can be introduced to cover audio-specific features. For example, the stored original may contain multiple tracks for stereophonic playback. The client can specific that only a single channel, or a monophonic version of both channels, is delivered.

### K. Benefits

### Reduced storage

Because of the nature of the encoding for the image data it is possible to meet a number of different requests from the same file. This reduces the storage requirement on the server machine. For example, a Web page may contain a thumbnail version of a photograph as well as a full-sized version. With existing technology this is usually achieved by having two distinct versions of the image on the server. Using the method described in this specification, a single version of the image can be used in both places.

### Reduced network bandwidth

The nature of the image encoding can also reduce the amount of data that needs to be sent over the network, thus reducing download times. The server will only send the data that is required to display the image at the selected resolution. This is in contrast to existing solutions where images are sometimes shrunk after they are downloaded in order to fit into a smaller space. This leads to unneeded data being downloaded and slower display of web pages.

### Improved caching

The client can retain the information for an image that was downloaded at a particular resolution and quality and re-use it when the image is re-displayed. If the image is re-displayed at a lower resolution and quality, the existing data can be used and no new data needs to be downloaded. If the image is re-displayed at a higher quality or resolution, the existing data can be enhanced and only the extra slices for the higher resolution need to be downloaded.

### L. Appendix 1

Some Definitions of Terms, as used in the context of the illustrated embodiments

### Scale

A function can be analysed into a set of components with different time/space/frequency content. These components are called scales, and the process of analysis into scales is called multi-scale decomposition. The analysis is performed by a waveform of limited duration and zero integral, called a wavelet. Components that are highly localised in space or time but have an ill-defined frequency spectrum are small-scale and capture fine detail. Components that are spread through space but have a precisely-defined frequency spectrum are large-scale and capture general trends.

### Layer

A Layer is a conceptual part of a media file that initialises or refines a single homogeneous component of that file, where that component is data representing spatial resolution, temporal resolution, sample fidelity, colour or any other quality axis.

### Slice

A slice is the part of a media file which encodes the data for a layer within a single context. Hence, each layer within a particular media file is itself divided into a series of slices, one for each context.

### Base Layer

A layer which is sent first to a client to initialise a representation of a media object at that client, to which refinement layers are added.

### Refinement Layer

A Layer which is sent to a client subsequent to a Base Layer and which 'improves' the quality, according to some metric, of the representation of a media object at that client.

### Significance Layer

A layer where all the refinement information refers to a particular bit-position for all the coefficients undergoing refinement.

### Scale Layer

A layer for which all the refinement information is for a particular scale.

### Region Layer

A layer for which all the refinement information is for a particular connected region in a space or time-varying function.

### Distortion

The distortion of an image can be measured in terms of it's Peak Signal-to-Noise Ratio (PSNR) where PSNR = 10log (255^2/MSE) dB, and MSE is the image's Mean Squared Error.

### QualityTags

The set of axes that are available to represent different aspects of perceived quality, for example, spatial resolution, temporal resolution, fidelity of a reconstructed pixel with respect to the original, etc.

### QualityDivisions

The marking scheme for the QualityTags axes, for example, the spatial resolution axis may be marked with low, medium, high.

### QualityParams

A set of classifiers that can be used to describe the contribution of an item of encoded media to the perceived quality of the reconstruction. A QualityParams classifier is defined by a (QualityTags=QualityDivisions) pair, for example, fidelity=6, or resolution=high.

### Codebook

A table that provides an abstraction mechanism such that quality-manipulation operations can be defined on media files that are valid irrespective of their original compression format. The Codebook achieves format-independence through use of the QualityParams classification system.

### Filter

An information structure that defines a partitioning of a layered media file into two parts; one part representing the media file at a reduced quality, and the other representing the enhancement information needed to reconstruct the original file. The simplest implementation is a bitmask where 'zero' and 'one' at bit positions n specifies whether a data item with a particular label (n) is or is not required in the lower-quality output file.

### Filter Mask

A piece of information that is appended to a filtered file in order to inform downstream tools about the information content of the file (i.e, what has been filtered out of it). If the filter is implemented as a simple bitmask then the filter mask can simply be a copy of this filter.

## Claims

1. A method of delivering a media file to a device on a network in which a server derives the media file from a source file on the server and delivers the media file to the device; the derivation and/or delivery being in compliance with a set of download parameters, the download parameters defining several download and/or media variables;
wherein (a) each download and/or media variable relates to a different aspect of the quality of the media file and (b) the download parameters further describe how each of the several download and/or media variables improve over time.

2. The method of Claim 1 in which each of the multiple download and/or media variables are selected from a set of download and/or media variables which define all variables representing an aspect of the quality of the media file.

3. The method of Claim 1 or 2 in which the order in which quality is improved across the multiple download and/or media variables is specified by assigning levels of relative importance to one or more quality parameters associated with the media file.

4. The method of any preceding Claim wherein the set of download parameters is stored on the server.

5. The method of any preceding Claim wherein the download parameters are transmitted to the server by the device before or during the delivery of the media file.

6. The method of any preceding Claim wherein the download parameters define one or more of the following download and/or media variables for an image or sequence of images:
(i) the spatial resolution of the image or images;
(ii) the level of distortion in the image or images;
(iii) the number of displayable frames;
(iv) the selection of colour components within one or more frames; and
(v) a sub-set of the available frames to be delivered.

7. The method of any preceding Claim wherein the download parameters define one or more of the following download and/or media variables for audio:
(i) the distortion of the audio;
(ii) the dynamic range of the audio;
(iii) the number of audio channels to be transmitted; and
(iv) selection of monophonic, stereophonic or quadraphonic audio.

8. The method of Claim 1 wherein the download parameters define one or more of the following:
(i) the preferred order in which data is to be transmitted;
(ii) the rate at which data is to be transmitted to the client;(iii) the set of data for the source file that is already stored on the client and does not need to be transmitted; and
(iii) the maximum amount of data to be transmitted to the client;

9. The method of any preceding Claim in which the derivation of the media file is adapted to take account of one or more of the following:
(i) the data size of the original of the source file;
(ii) the bandwidth available to a client;
(iii) the current or predicted loading of the server;
(iv) the resources available on the client for decoding and storing the media.

10. The method of any preceding Claim in which any one or more of the download parameters may be altered by the device after the transfer of the media file has completed and any extra data required to satisfy the revised download parameters are then transferred from the server.

11. The method of any preceding Claim in which the media file is generated using a wavelet transform.

12. The method of Claim 11 in which the output of the wavelet transform is compressed using SPIHT compression.

13. The method of any preceding Claim in which the media file is derived such that the quality of the media file at the device progressively increases as additional data is downloaded to the device.

14. The method of any preceding Claim in which the media file is derived such that the number of displayable frames in a sequence progressively increase as additional data is downloaded to the device.

15. The method of any preceding Claim in which some or all of the media file is retained on the device and subsequent use of the source file by the device at a different resolution, quality or frame rate utilises the retained data together with any additional data that is required.

16. The method of any preceding Claim in which the data in the media file is structured by an encoder as a bitstream including several discrete bitstream layers, in which layer signalling information which identifies individual layers is inserted by the encoder, the layer signalling information enabling each device to be sent only those layers which satisfy the download parameters specified by that device.

17. A computer program which when running on a server or encoder enables the server or encoder to perform any of the methods defined in Claims 1-16.

18. A server programmed to deliver to a device on a network a media file deriving from a source file stored on the server, wherein the server is programmed to derive the media file from a source file on the server and deliver the media file to the device, the derivation and/or delivery being in compliance with a set of download parameters, the download parameters defining several download and/or media variables;
wherein (a) each download and/or media variable relates to a different aspect of the quality of the media file and (b) the download parameters further describe how each of the several download and/or media variables improve over time.

## Patentansprüche

1. Verfahren zum Übermitteln einer Mediendatei zu einem Gerät auf einem Netzwerk, in dem ein Server die Mediendatei aus einer Quelldatei auf dem Server ableitet und die Mediendatei zu dem Gerät überträgt, wobei die Ableitung und/oder Übermittlung gemäß einem Satz von Download-Parametern erfolgt, wobei die Download-Parameter mehrere Download- und/oder Medienvariablen definieren;
wobei (a) jede Download- und/oder Medienvariable sich auf einen anderen Aspekt der Qualität der Mediendatei bezieht, und (b) die Download-Parameter ferner beschreiben, wie sich die einzelnen der mehreren Download- und/oder Medienvariablen im Laufe der Zeit verbessern.

2. Verfahren nach Anspruch 1, bei dem die einzelnen der mehreren Downloadund/oder Medienvariablen aus einem Satz von Download- und/oder Medienvariablen ausgewählt werden, die alle Variablen definieren, die einen Aspekt der Qualität der Mediendatei repräsentieren.

3. Verfahren nach Anspruch 1 oder 2, bei dem die Reihenfolge, in der Qualität über die mehreren Download- und/oder Medienvariablen verbessert wird, durch Zuweisen von Stufen relativer Bedeutung zu einem oder mehreren Qualitätsparametern in Verbindung mit der Mediendatei vorgegeben wird.

4. Verfahren nach einem der vorherigen Ansprüche, bei dem der Satz von Download-Parametern auf dem Server gespeichert wird.

5. Verfahren nach einem der vorherigen Ansprüche, bei dem die Download-Parameter von dem Gerät vor oder nach der Übermittlung der Mediendatei zu dem Server übertragen werden.

6. Verfahren nach einem der vorherigen Ansprüche, wobei die Download-Parameter eine oder mehrere der folgenden Download- und/oder Medienvariablen für ein Bild oder eine Sequenz von Bildern definieren:
(i) die räumliche Auflösung des Bildes oder der Bilder;
(ii) das Verzerrungsniveau in dem Bild oder den Bildern;
(iii) die Anzahl der anzeigefähigen Bildrahmen;
(iv) die Wahl von Farbkomponenten in einem oder mehreren Bildrahmen; und
(v) eine Teilmenge der zu übermittelnden verfügbaren Bildrahmen.

7. Verfahren nach einem der vorherigen Ansprüche, bei dem die Download-Parameter eine oder mehrere der folgenden Download- und/oder Medienvariablen für Ton variieren:
(i) die Verzerrung des Tons;
(ii) der dynamische Bereich des Tons;
(iii) die Anzahl der zu übertragenden Tonkanäle; und
(iv) die Wahl von Monophon-, Stereophon- oder Quadraphon-Ton.

8. Verfahren nach Anspruch 1, bei dem die Download-Parameter eine oder mehrere der folgenden Punkte definieren:
(i) die bevorzugte Reihenfolge, in der Daten übertragen werden sollen;
(ii) die Rate, mit der Daten zum Client übertragen werden sollen;
(iii) der Satz von Daten für die Quelldatei, der bereits auf dem Client gespeichert ist und nicht übertragen zu werden braucht; und
(iv) die Höchstmenge der zum Client zu übertragenden Daten.

9. Verfahren nach einem der vorherigen Ansprüche, bei dem bei der Ableitung der Mediendatei ein oder mehrere der folgenden Punkte berücksichtigt werden soll(en):
(i) die Datengröße des Originals der Quelldatei;
(ii) die einem Client zur Verfügung stehende Bandbreite;
(iii) das aktuelle oder vorhergesagte Laden des Servers;
(iv) die Betriebsmittel, die auf dem Client zum Decodieren und Speichern des Mediums zur Verfügung stehen.

10. Verfahren nach einem der vorherigen Ansprüche, bei dem ein oder mehrere beliebige(r) der Download-Parameter von dem Gerät geändert werden kann/können, nachdem die Mediendatei vollständig übertragen wurde, und eventuelle zusätzliche Daten, die benötigt werden, um die revidierten Download-Parameter zu erfüllen, dann vom Server übertragen werden.

11. Verfahren nach einem der vorherigen Ansprüche, bei dem die Mediendatei mit einer Wavelet-Transformation erzeugt wird.

12. Verfahren nach Anspruch 11, bei dem der Ausgang der Wavelet-Transformation mit SPIHT-Kompression komprimiert wird.

13. Verfahren nach einem der vorherigen Ansprüche, bei dem die Mediendatei so abgeleitet wird, dass die Qualität der Mediendatei an dem Gerät progressiv zunimmt, während zusätzliche Daten auf das Gerät heruntergeladen werden.

14. Verfahren nach einem der vorherigen Ansprüche, bei dem die Mediendatei so abgeleitet wird, dass die Anzahl der anzeigefähigen Bildrahmen in einer Sequenz progressiv zunimmt, während zusätzliche Daten auf das Gerät heruntergeladen werden.

15. Verfahren nach einem der vorherigen Ansprüche, bei dem die Mediendatei ganz oder teilweise auf dem Gerät behalten wird und eine nachfolgende Verwendung der Quelldatei durch das Gerät mit einer anderen Auflösung, Qualität oder Bildrahmenrate die behaltenen Daten zusammen mit eventuell benötigten zusätzlichen Daten verwendet.

16. Verfahren nach einem der vorherigen Ansprüche, bei dem die Daten in der Mediendatei mit einem Codierer zu einem Bitstream strukturiert werden, einschließlich mehrerer diskreter Bitstream-Schichten, in die der Codierer Schichtkennzeichnungsinformationen einfügt, die einzelne Schichten identifizieren, wobei es die Schichtkennzeichnungsinformationen zulassen, dass zu jedem Gerät nur diejenigen Schichten gesendet werden, die die von diesem Gerät vorgegebenen Download-Parameter erfüllen.

17. Computerprogramm, das, wenn es auf einem Server oder Codierer abläuft, es zulässt, dass der Server oder Codierer beliebige der in den Ansprüchen 1-16 definierten Verfahren durchführt.

18. Server, der zum Übermitteln einer Mediendatei zu einem Gerät auf einem Netzwerk programmiert ist, die von einer auf dem Server gespeicherten Quelldatei abgeleitet ist, wobei der Server so programmiert ist, dass er die Mediendatei von einer Quelldatei auf dem Server ableitet und die Mediendatei zu dem Gerät übermittelt, wobei die Ableitung und/oder Übermittlung einem Satz von Download-Parametern entspricht, wobei die Download-Parameter mehrere Download- und/oder Medienvariablen definieren;
wobei (a) jede Download- und/oder Medienvariable sich auf einen anderen Aspekt der Qualität der Mediendatei bezieht, und (b) die Download-Parameter ferner beschreiben, wie sich die einzelnen der mehreren Download- und/oder Medienvariablen im Laufe der Zeit verbessern.

## Revendications

1. Procédé destiné à transmettre un fichier média à un périphérique appartenant à un réseau dans lequel un serveur extrait le fichier média d'un fichier source sur le serveur et transmet le fichier média au périphérique, l'extraction et/ou la transmission étant en conformité à un ensemble de paramètres de téléchargement, les paramètres de téléchargement définissant plusieurs variables de téléchargement et/ou de média ;
dans lequel (a) chaque variable de téléchargement et/ou de média se rapporte à un aspect différent de la qualité du fichier média et (b) les paramètres de téléchargement décrivent par ailleurs comment chacune des plusieurs variables de téléchargement et/ou de média s'améliore avec le temps.

2. Procédé selon la revendication 1, dans lequel chacune des multiples variables de téléchargement et/ou de média est sélectionnée parmi un ensemble de variables de téléchargement et/ou de média qui définissent toutes les variables représentant un aspect de la qualité du fichier média.

3. Procédé selon la revendication 1 ou la revendication 2, dans lequel l'ordre selon lequel la qualité est améliorée sur toutes les multiples variables de téléchargement et/ou de média est spécifié par l'affectation de niveaux d'importance relative à l'un ou à plusieurs des paramètres de qualité associés au fichier média.

4. Procédé selon l'une quelconque des revendications précédentes, dans lequel l'ensemble des paramètres de téléchargement est enregistré sur le serveur.

5. Procédé selon l'une quelconque des revendications précédentes, dans lequel les paramètres de téléchargement sont transmis au serveur par le périphérique avant ou pendant la transmission du fichier média.

6. Procédé selon l'une quelconque des revendications précédentes, dans lequel les paramètres de téléchargement définissent une ou plusieurs des variables de téléchargement et/ou de média suivantes pour une image ou une séquence d'images :
(i) la résolution spatiale de l'image ou des images ;
(ii) le niveau de distorsion dans l'image ou dans les images ;
(iii) le nombre de trames visualisables ;
(iv) la sélection des composantes chromatiques dans une trame ou plus ; et
(v) un sous-ensemble des trames disponibles devant être transmises.

7. Procédé selon l'une quelconque des revendications précédentes, dans lequel les paramètres de téléchargement définissent une ou plusieurs des variables de téléchargement et/ou de média suivantes pour le son :
(i) la distorsion du son ;
(ii) l'étendue dynamique du son ;
(iii) le nombre de canaux son devant être transmis ; et
(iv) la sélection de son monophonique, stéréophonique ou tétraphonique.

8. Procédé selon la revendication 1, dans lequel les paramètres de téléchargement définissent un ou plusieurs des éléments suivants :
(i) l'ordre préféré selon lequel les données doivent être transmises ;
(ii) le débit auquel les données doivent être transmises au client ;
(iii) l'ensemble des données pour le fichier source qui sont déjà enregistrées sur le client et qui n'ont pas besoin d'être transmises ; et
(iv) la quantité maximale des données devant être transmises au client.

9. Procédé selon l'une quelconque des revendications précédentes, dans lequel l'extraction du fichier média est adaptée pour tenir compte de l'un ou de plusieurs des éléments suivants :
(i) la taille des données de l'original du fichier source ;
(ii) la bande passante disponible pour un client ;
(iii) le chargement actuel ou prédit du serveur ;
(iv) les ressources disponibles sur le client pour décoder et enregistrer le fichier média.

10. Procédé selon l'une quelconque des revendications précédentes, dans lequel un ou plusieurs des paramètres de téléchargement peuvent être modifiés par le périphérique après la réalisation du transfert du fichier média et dans lequel toutes les données supplémentaires nécessaires pour satisfaire les paramètres de téléchargement révisés sont alors transférées en provenance du serveur.

11. Procédé selon l'une quelconque des revendications précédentes, dans lequel le fichier média est produit à l'aide d'une transformation par ondelettes.

12. Procédé selon la revendication 11, dans lequel la sortie de la transformation par ondelettes est comprimée à l'aide de la compression SPIHT.

13. Procédé selon l'une quelconque des revendications précédentes, dans lequel le fichier média est extrait de telle manière que la qualité du fichier média au niveau du périphérique augmente progressivement au fur et à mesure que des données supplémentaires sont téléchargées dans le périphérique.

14. Procédé selon l'une quelconque des revendications précédentes, dans lequel le fichier média est extrait de telle manière que le nombre de trames visualisables en une séquence augmente progressivement au fur et à mesure que des données supplémentaires sont téléchargées dans le périphérique.

15. Procédé selon l'une quelconque des revendications précédentes, dans lequel une partie ou l'intégralité du fichier média est retenue sur le périphérique et dans lequel toute utilisation ultérieure du fichier source par le périphérique à une résolution différente, une qualité différente ou un taux de trame différent utilise les données retenues ainsi que les données supplémentaires nécessaires.

16. Procédé selon l'une quelconque des revendications précédentes, dans lequel les données figurant dans le fichier média sont structurées par un codeur sous forme d'un train de bits y compris plusieurs couches discrètes de trains de bits, dans lequel les informations de signalisation de couche qui identifient les couches individuelles sont insérées par le codeur, les informations de signalisation de couche permettant à chaque périphérique de ne recevoir que les couches qui satisfont aux paramètres de téléchargement spécifiés par ce périphérique.

17. Programme d'ordinateur qui lorsqu'il est exploité sur un serveur ou un codeur permet au serveur ou au codeur d'exécuter l'un quelconque des procédés définis dans les revendications 1 à 16. '

18. Serveur programmé pour transmettre à un périphérique appartenant à un réseau un fichier média extrait d'un fichier source enregistré sur le serveur, dans lequel le serveur est programmé pour extraire le fichier média d'un fichier source sur le serveur et transmettre le fichier média au périphérique, l'extraction et/ou la transmission étant en conformité à un ensemble de paramètres de téléchargement, les paramètres de téléchargement définissant plusieurs variables de téléchargement et/ou de média ;
dans lequel (a) chaque variable de téléchargement et/ou de média se rapporte à un aspect différent de la qualité du fichier média et (b) les paramètres de téléchargement décrivent par ailleurs comment chacune des plusieurs variables de téléchargement et/ou de média s'améliore avec le temps.
